## Europäisches Patentamt
## European Patent Office
## Office européen des brevets

(19)

(11) Numéro de publication : **0 092 682**
**B1**

(12)

# FASCICULE DE BREVET EUROPÉEN

(45) Date de publication du fascicule du brevet :
08.07.87

(51) Int. Cl.⁴ : **C 10 M105/00// C09K19/00**

(21) Numéro de dépôt : **83102980.6**

(22) Date de dépôt : **25.03.83**

(54) **Lubrifiant.**

(30) Priorité : **22.04.82 FR 8207280**

(43) Date de publication de la demande :
**02.11.83 Bulletin 83/44**

(45) Mention de la délivrance du brevet :
**08.07.87 Bulletin 87/28**

(84) Etats contractants désignés :
**CH DE GB LI**

(56) Documents cités :
**DE-A- 2 024 269**
**FR-A- 2 097 847**
**GB-A- 1 368 727**
**US-A- 3 801 361**
**US-A- 3 951 846**
**CHEMICAL ABSTRACTS, vol. 89, no. 18, 30 octobre 1978, page 262, no. 151113c, Columbus, Ohio, USA. R. I. KARABANOV et al.: "Use of liquid crystals as cutting fluid components during metalworking"**
**CHEMICAL ABSTRACTS, vol. 92, no. 22, 2 juin 1980, page 120, no. 183291n, Columbus, Ohio, USA. V. BOBROV: "Physical chemistry of solid-liquid crystal contact interactions"**
**CHEMICAL ABSTRACTS, vol. 76, no. 20, 15 mai 1972, page 349, no. 117812b, Columbus, Ohio, USA. E. DRAUGLIS et al.: "Thin film rheology of boundary lubricating surface films. 2"**
**PATENTS ABSTRACTS OF JAPAN, vol. 2, no. 24, 16 février 1978, page 4051C77**

(73) Titulaire : **ASULAB S.A.**
**Faubourg du Lac 6**
**CH-2502 Bienne (CH)**

(72) Inventeur : **Cognard, Jacques**
**Suchiez 53**
**CH-2006 Neuchâtel (CH)**
Inventeur : **Ganguillet, Claude**
**Avenue des Alpes 22**
**CH-2006 Neuchâtel (CH)**

(74) Mandataire : **Micheli, Michel-Pierre et al**
**MICHELI & CIE 118, Rue du Rhône Case Postale 47**
**CH-1211 Genève 6 (CH)**

## Description

La présente invention se rapporte à l'utilisation de compositions lubrifiantes connues comme huiles horlogères.

Dans l'industrie horlogère, on utilise pour la lubrification de nombreux types d'huiles et de graisses organiques ou minérales. Bien que la gamme des produits lubrifiants actuellement à disposition soit très étendue, il reste souhaitable pour certaines applications de trouver de nouveaux types de lubrifiants qui sont plus stables, qui peuvent être utilisés sur une plus grande plage de températures et qui permettent d'offrir à l'utilisateur un choix plus vaste de valeurs de viscosité.

En outre, des publications antérieures ont mis en évidence le fait que les cristaux liquides pouvaient présenter des propriétés lubrifiantes. Plus particulièrement, le document CA 89,18 (1978) No 151113c mentionne l'utilisation de cristaux liquides comme additifs dans des fluides de coupe ; d'autre part, le document CA 76,20 (1972) No 117812b divulgue une étude de la rhéologie des films minces déposés sur des surfaces donnant des régimes de lubrification limite.

Le but de cette invention est donc de fournir une nouvelle huile horlogère qui permette de satisfaire les exigences ci-dessus. Ce but est atteint par la présente invention, qui consiste en l'utilisation comme huile horlogère d'une composition essentiellement constituée par un cristal liquide ou par un mélange de cristaux liquides.

Les présents inventeurs ont, en effet, constaté que les cristaux liquides peuvent être de manière inattendue utilisés directement comme huile horlogère, seuls ou en mélanges avec d'autres compositions lubrifiantes.

On rappellera ici que les cristaux liquides sont des liquides anisotropes obtenus, entre certaines limites de température, par fusion de certains composés organiques cristallisés, et qu'ils présentent une structure ordonnée. Les cristaux liquides présentent deux états mésomorphes, à savoir l'état smectique et l'état nématique, le premier étant plus voisin de l'état cristallisé et le second étant plus voisin de l'état liquide.

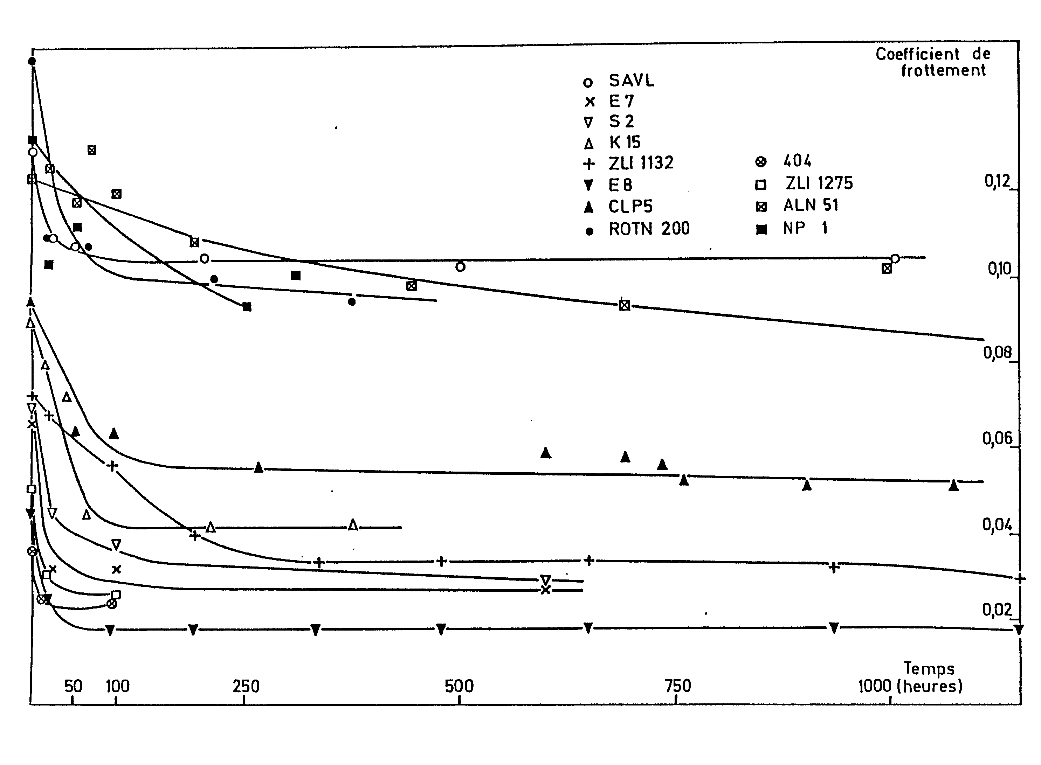

La figure unique annexée est un graphique représentant, en fonction du temps, la variation du coefficient de frottement de quelques cristaux liquides et celui d'une huile horlogère connue.

Pour tenter d'expliquer les propriétés lubrifiantes des cristaux liquides, les présents inventeurs sont partis de l'étude de l'alignement des cristaux liquides nématiques à la surface d'un solide. Cette étude a montré qu'il se formait à l'interface entre le solide et le cristal liquide une couche adhérente organisée, et que les déformations imposées au cristal liquide se produisaient dans un plan situé au-delà de cette couche (voir J. Cognard, Mol. Cryst. Liq. Cryst. 64, 331-342, 1981). Selon les inventeurs, c'est cette propriété qui pourrait entraîner les propriétés lubrifiantes des cristaux liquides, dans leur phase nématique plus particulièrement, puisque d'une part un frottement cristal liquide sur cristal liquide est produit et d'autre part que l'organisation quasi-smectique de la couche interfaciale la rend pratiquement incompressible.

Il ressort de ce qui précède que les cristaux liquides nématiques sont préférés aux smectiques.

Pratiquement toutes les classes de cristaux liquides sont utilisables comme lubrifiants, notamment les azoxys, les phénylcyclohexanes, les esters, les discotiques, les cyanobiphényles, etc. Ces derniers, qui se présentent sous la forme de molécules cylindriques, sont ceux qui semblent donner les meilleurs résultats comme lubrifiants. Toutefois, d'un point de vue pratique, on peut envisager l'utilisation de mélanges d'esters et de cyanobiphényles. De plus, le mélange de plusieurs cristaux liquides permet d'élargir la plage de températures pour laquelle la phase nématique, et donc aussi les propriétés lubrifiantes, est conservée.

En outre, il a également été constaté que les cristaux liquides s'alignent spontanément parallèlement aux surfaces inorganiques, par exemple l'acier ou le rubis (voir J. Cognard, Mol. Cryst. Liq. Cryst., suppl. 1, 1982). Dans ce cas, les forces d'interactions latérales sont plus élevées que celles existant entre les molécules alignées perpendiculairement à la surface, ce qui est défavorable pour le coefficient de frottement. C'est pourquoi, afin de diminuer ce coefficient de frottement, on peut ajouter au cristal liquide utilisé comme lubrifiant ou à la composition contenant un cristal liquide un agent d'orientation connu destiné à favoriser l'alignement perpendiculaire des molécules, par exemple de l'octadécyltriméthoxysilane (ODS).

Les propriétés des cristaux liquides utilisés comme lubrifiants peuvent également être modifiées par l'addition d'agents anti-oxydants, de produits anti-corrosion (par exemple benzotriazole sur CuBe) ou de produits modifiant la tension superficielle.

L'invention sera maintenant illustrée en référence aux exemples suivants :

Exemple 1

Comparaison entre le coefficient de frottement d'une huile horlogère connue et celui de différents cristaux liquides

Pour mettre en évidence les propriétés lubrifiantes des cristaux liquides, il a été procédé à des mesures du coefficient de frottement en fonction du temps d'une part pour une huile horlogère connue, à savoir « Syntha Visco Lube » de Moebius S. A. (SAVL), et d'autre part des cristaux liquides suivants :

a) Nématiques

cyanobiphényles : K15, E7 et E8 (BDH Chem. Co.)

cyanophénylcyclohexane : ZLI 1132 (Merck Co.)

ester : ZLI 1275 (Merck Co.)

base de Schiff : ROTN 200 (Hoffmann La Roche)

azoxy : CLP5 (Merck Co.)

mélange de cyanobiphényle et cyanophénylpyrimidine : 404 (Hoffmann La Roche)

mélanges d'alkyles phénylcyclohexanes : N P 1 et ALN 51 (ASULAB S. A.)

b) Smectiques

cyanobiphényle : S2 (BDH Chem. Co.)

c) Composés solides à la température ordinaire

cyanobiphényles : M24 et M27 (BDH Chem. Co.)

Le couple de frottement utilisé pour ces mesures était constitué par un axe en acier « DTS 8 » ou « 17AP » tournant dans un palier en rubis ou saphir. Les essais ont été effectués selon la procédure décrite par C. Ganguillet et al dans le bulletin de la Société Suisse de Chronométrie, 1971, pp 153-156. Il est bien entendu que les résultats obtenus, qui sont reportés sur la feuille de dessin annexée, doivent être considérés relativement les uns aux autres et à l'huile de référence (SAVL) et non comme des valeurs absolues.

Comme on peut le constater, les coefficients de frottement obtenus avec les cristaux liquides sont meilleurs que le coefficient de frottement obtenu avec l'huile de référence.

Il faut relever que parmi les cristaux liquides smectiques, le S2, dont la température de liquéfaction est inférieure à la température ambiante, donne des résultats similaires à ceux obtenus avec les cristaux liquides nématiques. Par contre, pour M24 et M27 qui sont solides à la température ambiante, les coefficients de frottement sont de l'ordre de 0,2 à 0,4. Ils ne figurent donc pas sur le graphique du dessin annexé.

Exemple 2

Utilisation d'un cristal liquide comme additif

On a mesuré le coefficient de frottement dans les mêmes conditions que celles décrites dans l'exemple 1, en utilisant comme lubrifiant l'huile horlogère de référence SAVL additionnée de 1 % du cristal liquide K15 (cyanobiphényle pur).

Les résultats obtenus indiquent que le palier du coefficient de frottement pour l'huile SAVL pure situé vers 0,10 (voir dessin annexé) est abaissé par l'addition du cristal liquide jusqu'à environ 0,05, soit la moitié environ de la valeur initiale.

L'effet remarquable d'aussi faibles quantités d'additif peut s'expliquer par le fait que, le cristal liquide ayant un pouvoir d'absorption supérieur à celui de l'huile, la proportion du cristal liquide est beaucoup plus grande sur les surfaces de frottement qu'à l'intérieur de la goutte. Il est ainsi possible de réaliser des lubrifiants extrêmement performants, pour un coût très faible.

Exemple 3

Utilisation d'un agent d'alignement

On a utilisé pour cet essai comparatif comme agent d'alignement perpendiculaire de l'octadécyltriméthoxysilane (ODS) avec lequel on a traité l'axe et le palier avant de déposer le cristal liquide servant de lubrifiant, dans ce cas le E7.

Les résultats obtenus montrent que le palier du coefficient de frottement pour le E7 pur situé vers 0,3 (voir dessin annexé) est abaissé par la présence simultanée de l'agent d'alignement jusqu'à environ 0,15 à 0,20.

Exemple 4

Vitesse d'étalement

On a mesuré la vitesse d'étalement d'une goutte de cristal liquide, par mesure du diamètre de la goutte sous le microscope sur un substrat en verre revêtu d'une couche de polyimide frotté pour assurer l'alignement planaire.

Les résultats obtenus ont montré que certains cristaux liquides, par exemple ZLI 1132, ont un étalement inférieur à 10 % après 30 minutes. Cette vitesse d'étalement est sensiblement la même que celle de l'huile SAVL.

Ainsi, les exemples ci-avant illustrent clairement les propriétés lubrifiantes des cristaux liquides.

Un cristal liquide peut donc être utilisé, seul ou mélangé à d'autres cristaux liquides sans autre additif, comme lubrifiant.

Un cristal liquide peut de plus être utilisé également comme additif, tendant à diminuer le coefficient de frottement notamment, par exemple dans des huiles horlogères, automobiles, de coupe ou autres, telles que celles utilisées couramment, ou dans des graisses de lubrification.

Enfin, un cristal liquide peut être utilisé en solution diluée pour déposer un film lubrifiant sur un substrat. Ceci permet non seulement de réaliser une économie de cristal liquide, mais aussi d'utiliser des cristaux liquides solides ou encore des cristaux smectiques (dont l'alignement est alors plus facile à réaliser).

Les principaux avantages de l'utilisation des cristaux liquides comme lubrifiants ou additifs de lubrification sont leur grande stabilité, surtout à la température (notablement plus que les glycoléthers par exemple), la possibilité d'ajuster la viscosité sur une grande plage par le choix des composants du mélange, et le fait qu'ils peuvent être utilisés dans un domaine de températures étendu, par exemple de — 30 à + 150 °C, grâce à la surfusion élevée de leurs mélanges, ainsi que leur faible étalement.

**Revendications**

1. Utilisation comme huile horlogère d'une composition essentiellement constituée par un cristal liquide ou par un mélange de cristaux liquides.

2. Utilisation selon la revendication 1, caractérisée par le fait que le cristal liquide ou le mélange de cristaux liquides est choisi parmi les cristaux liquides nématiques.

3. Utilisation selon la revendication 2, caractérisée par le fait qu'au moins un cristal liquide est choisi parmi les azoxys.

4. Utilisation selon la revendication 2, caractérisée par le fait qu'au moins un cristal liquide est choisi parmi les phénylcyclohexanes.

5. Utilisation selon la revendication 2, caractérisée par le fait qu'au moins un cristal liquide est choisi parmi les esters.

6. Utilisation selon la revendication 2, caractérisée par le fait qu'au moins un cristal liquide est choisi parmi les cyanobiphényles.

7. Utilisation selon l'une des revendications 1 à 6, caractérisée par le fait que la composition contient un agent d'alignement.

8. Utilisation selon la revendication 7, caractérisée par le fait que l'agent d'alignement est un octadécyltriméthoxysilane.

**Claims**

1. Use as a watch oil of a composition essentially constituted by a liquid crystal or by a mixture of liquid crystals.

2. Use according to claim 1, characterized by the fact that the liquid crystal or the mixture of liquid crystals is chosen among the nematic liquid crystals.

3. Use according to claim 2, characterized by the fact that at least one liquid crystal is chosen among the azoxy compounds.

4. Use according to claim 2, characterized by the fact that at least one liquid crystal is chosen among the phenylcyclohexanes.

5. Use according to claim 2, characterized by the fact that at least one liquid crystal is chosen among the esters.

6. Use according to claim 2, characterized by the fact that at least one liquid crystal is chosen among the cyanobiphenyls.

7. Use according to one of claims 1 to 6, characterized by the fact that the composition contains an alignment agent.

8. Use according to claim 7, characterized by the fact that the alignment agent is an octadecyltrimethoxysilane.

**Patentansprüche**

1. Verwendung als Uhrenöl einer Zusammensetzung die im wesentlichen aus einem Flüssigkristall oder aus einer Mischung von Flüssigkristallen besteht.

2. Verwendung nach Anspruch 1, dadurch gekennzeichnet, dass der Flüssigkristall oder die Mischung der Flüssigkristalle nematische Flüssigkristalle sind.

3. Verwendung nach Anspruch 2, dadurch gekennzeichnet, dass wenigstens ein Flüssigkristall einer Azoxyverbindung ist.

4. Verwendung nach Anspruch 2, dadurch gekennzeichnet, dass wenigstens ein Flüssigkristall eine Phenylcyclohexanverbindung ist.

5. Verwendung nach Anspruch 2, dadurch gekennzeichnet, dass wenigstens ein Flüssigkristall ein Ester ist.

6. Verwendung nach Anspruch 2, dadurch gekennzeichnet, dass wenigstens ein Flüssigkristall eine Cyandiphenylverbindung ist.

7. Verwendung nach einem der Ansprüche 1 bis 6, dadurch gekennzeichnet, dass die Zusammensetzung ein Ausrichtmittel enthält.

8. Verwendung nach Anspruch 7, dadurch gekennzeichnet, dass das Ausrichtmittel ein Octadecyltrimethoxysilan ist.